# EUROPÄISCHE PATENTSCHRIFT

(11) **EP 1 614 462 B1**
(45) Veröffentlichungstag und Bekanntmachung des Hinweises auf die Patenterteilung: **25.04.2007**
(21) Anmeldenummer: 05011988.2
(22) Anmeldetag: 03.06.2005
(51) Int. Cl.: B01J 19/32, B01D 3/00

(54) **Mehrkanalpackung mit Katalysatoren**
Mutlichannel packing element with catalysts
Elément de remplissage à canaux multiples avec des catalyseurs

(30) Priorität: 09.07.2004 DE 102004033183
(43) Veröffentlichungstag der Anmeldung: 11.01.2006
(73) Patentinhaber: BASF Aktiengesellschaft, 67056 Ludwigshafen (DE)
(72) Erfinder: Kashani-Shirazi, Nawid, 93077 Bad Abbach (DE); Miller, Christian, 67152 Ruppertsberg (DE); Heissler, Heinrich-Dieter, 68305 Mannheim (DE); Müller, Joachim, 67269 Grünstadt (DE)

(56) Entgegenhaltungen:
- WO-A-03/047747
- DE-A1- 10 159 824
- US-B1- 6 299 845

## Beschreibung

Die vorliegenden Erfindung betrifft eine verbesserte Mehrkanalpackung für die Durchführung heterogen katalysierter Reaktivdestillationen.

Für die Durchführung von heterogen katalysierten Reaktivdestillationen haben sich in der Technik verschiedene Methoden etabliert.

Eine Möglichkeit besteht darin, die aktive Katalysatormasse direkt auf Packungen aufzubringen, die hinsichtlich ihrer Geometrie den aus der Destillationstechnik gebräuchlichen Bauformen entsprechen. Die Bauform KATAPAK-M der Fa. Sulzer AG, CH-8404 Winterthur ist ein Beispiel hierfür. Störend für den breiten industriellen Einsatz ist die schwierige Entwicklung solcher Katalysatorpackungen und die Tatsache, dass sich nicht alle katalytisch aktiven Massen mit der erforderlichen Abriebfestigkeit auf solche Packungen aufbringen lassen.

Stärker verbreitet sind daher Packungen, bei denen konventionelle Katalysatorpartikel verwendet werden können. Die Katalysatorkörner werden beispielsweise in Taschen aus Drahtgewebe eingebracht, die direkt als Destillationseinbauten dienen, wie die Bauform KATAPAK-S der Fa. Sulzer AG, CH-8404 Winterthur. Die Verwendung dieser Packungen ist jedoch störungsanfällig, da die passenden Flüssigkeitsberieselungsdichten genau eingehalten werden müssen, was sich in der Praxis als schwierig erweist.

Die Verwendung sogenannter "Bales", die von der Fa. CDTech, Houston, USA, angeboten werden, ist ähnlich. Die Taschenstrukturen sind jedoch wesentlich gröber, und die erzielbaren Trennstufen je Meter Kolonnenhöhe sind niedriger.

In dieser Hinsicht einfacher sind Systeme, bei denen der Katalysator auf Kolonnenböden aufgeschüttet wird, dort in der Flüssigkeit suspendiert (d.h. in Schwebe) ist oder in den Ablaufschächten der Kolonnen untergebracht ist. Aufgrund der fluiddynamischen Zustände auf den Böden lassen sich diese Möglichkeiten jedoch nur bei Katalysatoren anwenden, die sehr abriebfest sind. Dies trifft in der Praxis nur selten zu.

Aus diesen Überlegungen heraus entstand die Idee, eine oder mehrere Packungslagen mit unterschiedlicher geometrischer Oberfläche alternierend zusammenzusetzen. Dies ist beispielsweise in der WO 03/047747 A1 beschrieben (Anspruch 9). Die Packungslagen werden so ausgewählt, dass der Katalysator lediglich in die Kanäle der Packung mit niedrigerer spezifischer Oberfläche, die sogenannten Katalysatorkanäle, rieseln kann. Die Lagen mit höherer spezifischer Oberfläche, in die der Katalysator aus geometrischen Gründen nicht rieseln kann, werden bevorzugt vom Gas durchströmt und nachfolgend Gaskanäle genannt. Die Packung ist bevorzugt in Kreuzkanalstruktur aufgeführt. Dieses System wird nachfolgend als Mehrkanalpackung (MKP) bezeichnet.

Allerdings ist bei dieser Bauform der Mehrkanalpackung eine Befüllung im eingebauten Zustand lediglich von oben möglich, da sich seitlich die Kolonnenwand befindet. Dieser Umstand führt dazu, dass die Katalysatorkanäle, welche seitlich der Packung beginnen und an Gaskanäle grenzen, bei der aktuellen Bauform nicht oder nur unvollständig befüllt werden können.

Dies gilt für alle Katalysatorkanäle, die an eine Gaskanalpackungslage grenzen und die oben durch den Kolonnenmantel begrenzt werden und somit von oben nicht zugänglich sind. Dies kann bei kleineren Durchmessern von bis zu etwa 1 m je nach Ausführungsform und Höhe der Mehrkanalpackung einen erheblichen Anteil der Katalysatorkanäle betreffen.

Dies führt dazu, dass die Kolonne höher gebaut werden muss, um eine gegebene Katalysatormenge darin unterzubringen.

Es hat nicht an Versuchen gefehlt, diesen Nachteil zu vermeiden. So hat man versucht, die Katalysatormenge in den Katalysatorkanälen dadurch zu erhöhen, dass man weniger Katalysatorkanäle an Gaskanäle grenzen zu lässt, d.h. mindestens zwei Katalysatorkanäle nebeneinander anzuordnen. Dies ist jedoch bei dem Erfordernis von hohen Gaskanalanteilen nur bedingt möglich. Weiterhin wurde versucht, die Katalysatormenge in den Katalysatorkanälen dadurch zu erhöhen, dass man die Höhe einer Mehrkanalpackungslage reduziert, was jedoch den Aufwand erhöht und wirtschaftliche Nachteile mit sich bringt. Es wurde festgestellt, dass diese Maßnahmen keine effektive und verfahrenstechnisch einfache Verfahrensdurchführung ermöglichen.

Ein weiterer Nachteil der bekannten Mehrkanalpackungen besteht darin, dass in den nicht befüllten Katalysatorkanälen ungünstige fluiddynamische Zustände vorliegen können, da das Gas in diesem Fall bevorzugt in den unbefüllten Katalysatorkanälen strömt und nicht in den dafür vorgesehenen.

Es stellte sich somit die Aufgabe, eine verbesserte Mehrkanalpackung für die Durchführung heterogen katalysierter Reaktivdestillationen zu finden, welche den genannten Nachteilen abhilft und eine verfahrenstechnisch leichte und vollständige Befüllung der Katalysatorkanäle ermöglicht.

Demgemäß wurde eine Mehrkanalpackung für die Durchführung heterogen katalysierter Reaktivdestillationen gefunden, welche zumindest teilweise seitlich verkürzte Katalysatorkanäle aufweist, wobei diese Verkürzung das 1 - bis 10-fache des äquivalenten Durchmessers der einzufüllenden Katalysatorpartikel beträgt.

Durch die erfindungsgemäße Gestaltung der Mehrkanalpackung wird gewährleistet, dass der Katalysator in alle dafür vorgesehenen Katalysatorkanäle rieselt.

Ein weiterer Vorteil der erfindungsgemäßen Mehrkanalpackung im Vergleich zu den herkömmlichen Packungen für heterogene Standardkatalysatoren besteht darin, dass sich das Einbringen des Katalysators in die Packung deutlich einfacher gestaltet. Dabei wird der Katalysator auf die erfindungsgemäße Mehrkanalpackung geschüttet und rieselt anschließend in die dafür vorgesehenen Katalysatorkanäle. Die Gaskanäle werden hierbei so gestaltet, dass ein Eindringen des Katalysators geometrisch unmöglich ist.

Durch die erfindungsgemäße seitliche Verkürzung der Katalysatorkanäle kann der Katalysator bei der Befüllung seitlich an der Packungslage vorbei in die sonst unerreichbaren Katalysatorkanäle gelangen. Hierdurch wird vorteilhafterweise eine vollständige Befüllung der Mehrkanalpackung mit Katalysator erreicht und innerhalb der Kanäle stellen sich beim Betrieb stabile und gleichmäßige fluiddynamische Zustände ein.
Die seitliche Verkürzung der Katalysatorkanäle beträgt das 1 - bis 10-fache, bevorzugt das 1- bis 5-fache, besonders bevorzugt das 2- bis 5-fache des äquivalenten Durchmessers der einzufüllenden Katalysatorpartikel. Unter dem äquivalenten Durchmesser versteht man hierbei das Verhältnis zwischen dem sechsfachen des Partikelvolumens und der Oberfläche des Partikels. Oft wird dieser Durchmesser auch als Sauterdurchmesser bezeichnet.

Die erfindungsgemäße Verkürzung der Katalysatorkanäle kann sowohl nur an einer Seite oder auch bevorzugt an beiden Seiten durchgeführt werden.

Die Höhe der erfindungsgemäßen Mehrkanalpackung beträgt etwa 2 bis 30 cm, bevorzugt 3 bis 25 cm, besonders bevorzugt 15 bis 25 cm.

Dadurch, dass lediglich die Katalysatorkanäle verkürzt werden, können die Randabweiser an den Gaskanälen befestigt werden. Die bevorzugte Ausführungsform ist aus Gründen der Stabilität und Zentrierwirkung ganz oder teilweise aus Blech, es sind jedoch auch Gestaltungen aus Gewebe sowie Kombination der beiden Materialien oder andere, handelsübliche Materialien möglich.

Die erfindungsgemäße Vorrichtung eignet sich besonders für die Verwendung in Reaktoren und bei Reaktivdestillationen.

Als Katalysatoren werden beispielsweise Stränglinge oder Kugeln eingesetzt.

Im folgenden wird die erfindungsgemäße Vorrichtung anhand der Figuren exemplarisch näher erläutert.

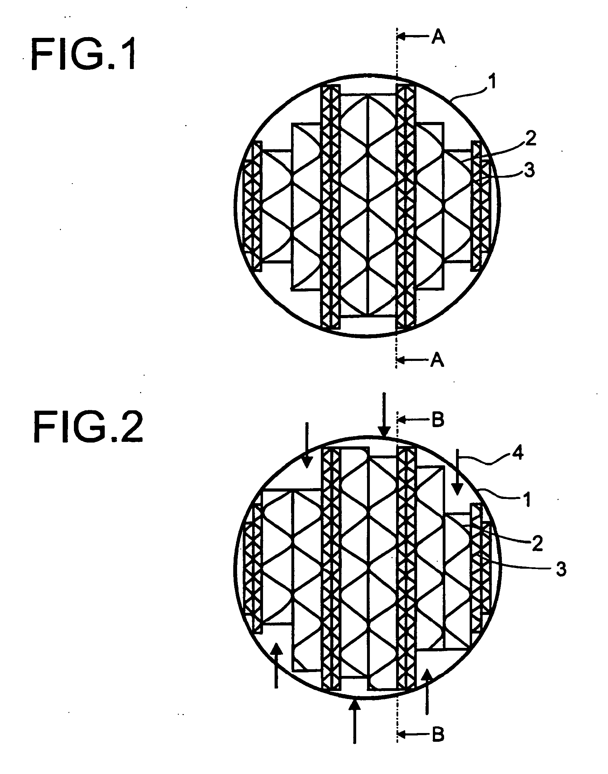

Figur 1 zeigt einen Schnitt durch eine Kolonne mit Kolonnenmantel (1) enthaltend die erfindungsgemäße Mehrkanalpackung. Neben den Gaskanälen (3) sind die seitlich verkürzten Katalysatorkanäle (2) zu sehen.

In Figur 2 wird der in Figur 1 beschriebene Aufbau noch durch weitere Pfeile (4) ergänzt. Diese zeigen eine bevorzugte Gestaltung der Katalysatorkanäle hinsichtlich ihrer Orientierung. Der Pfeil zeigt jeweils die Seite an, an der die Katalysatorkanäle bezogen auf eine Abwärtsströmung beginnen.

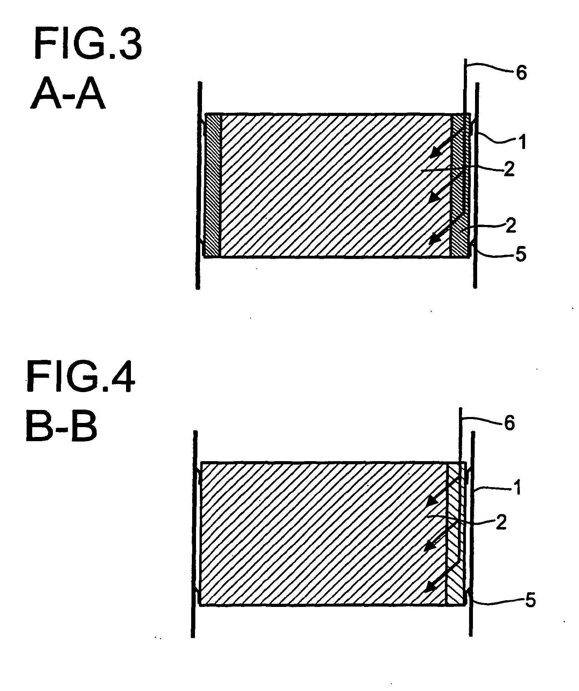

Figuren 3 und 4 zeigen erfindungsgemäße Ausgestaltungen in der Seitenansicht. Neben dem Kolonnenmantel (1) und den Katalysatorkanälen (2) sind hier auch Randabweiser (5) dargestellt. Weiterhin ist durch den Pfeil (6) zu erkennen, wie erfindungsgemäß der einzubringende Katalysator in alle Katalysatorkanäle gelangt.

### Beispiele:

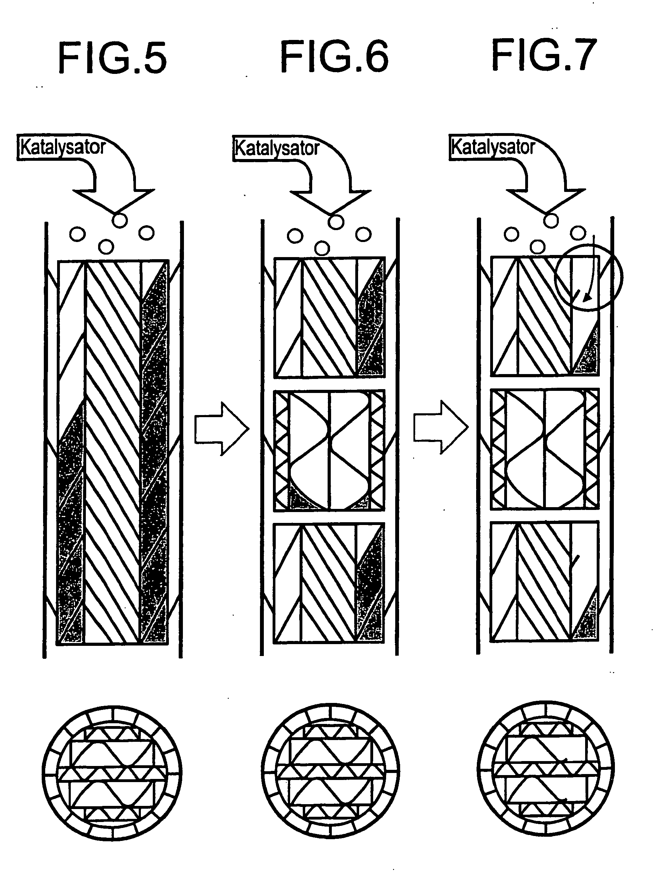

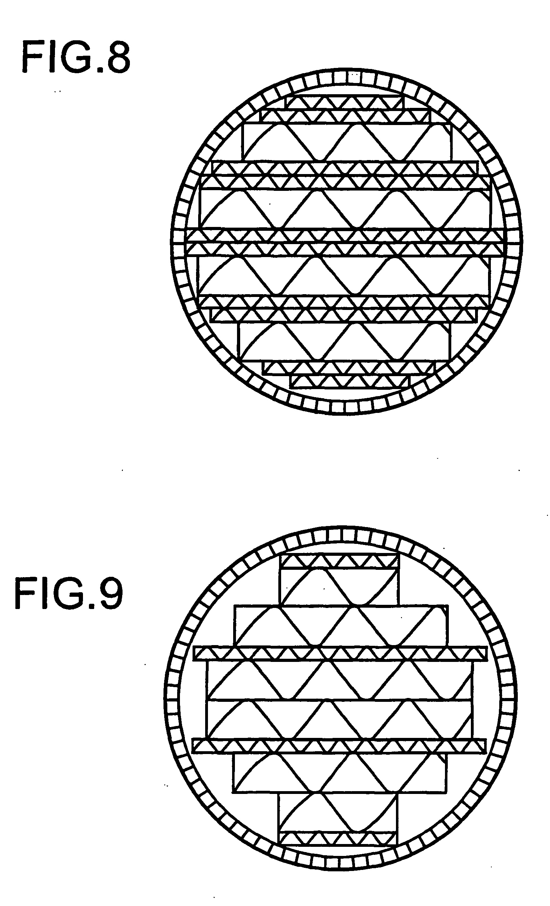

1. Im Labor wurde eine Mehrkanalpackung mit einem Durchmesser von 55 mm gemäß den Figuren 5 bis 7 eingesetzt. Der Aufbau entsprach der Figur 5. In die hellen Katalysatorkanäle rieselt von oben Katalysator ein, wenn die Packung im eingebauten Zustand befüllt wird. In die grau unterlegten Kanäle kann aus geometrischen Gründen kein Katalysator eindringen.
   Eine Verbesserung brachte ein Unterteilen einer Mehrkanalpackungslage in drei
   Lagen und ein gegenseitiges Verdrehen um 90°. Das Ergebnis war jedoch noch immer nicht zufriedenstellend, wie aus Figur 6 ersichtlich wird.
   Durch das erfindungsgemäße Entfernen der obersten Ecke der Katalysatorpackungslagen wie in C dargestellt, konnte ein nahezu vollständiges Befüllen aller Katalysatorkanäle gewährleistet werden, wie der Pfeil in Figur 7 verdeutlicht.
2. Im Technikum wurde eine Mehrkanalpackung mit einem Durchmesser von DN 150 eingesetzt. Der Aufbau ist in Figur 8 dargestellt. Eine Befüllung aller Katalysatorkanäle war bei der gegebenen Kolonnenhöhe von 2 m nicht möglich. Selbst eine Befüllung der einzelnen Mehrkanalpackungslagen nacheinander brachte keinen Fortschritt.
   Durch die in Figur 9 schematisch gezeigten erfindungsgemäßen Abänderungen im Aufbau der Mehrkanalpackung konnte eine Befüllung aller Katalysatorkanäle gewährleistet werden. Dazu gehört die Anordnung mindestens zweier Katalysatorkanäle nebeneinander und die fertigungstechnisch gesehen einfachere seitliche Verkürzung beider Seiten der Katalysatorkanäle.

## Patentansprüche

1. Mehrkanalpackung für die Durchführung heterogen katalysierter Reaktivdestillationen mit zumindest teilweise ein- oder beidseitig seitlich verkürzten Katalysatorkanälen, wobei diese Verkürzung das 1- bis 10-fache des äquivalenten Durchmessers der einzufüllenden Katalysatorpartikel beträgt.

2. Mehrkanalpackung nach Anspruch 1, wobei die Verkürzung das 2- bis 5-fache des äquivalenten Durchmessers beträgt.

3. Mehrkanalpackung nach Anspruch 1 oder 2, wobei die Verkürzung umfassend auf beiden Seiten durchgeführt wird.

4. Mehrkanalpackung nach Ansprüchen 1 bis 2, wobei lediglich die Seite verkürzt wird, an welcher die Katalysatorkanäle sonst oben durch den Kolonnenmantel begrenzt wären.

5. Mehrkanalpackung, **dadurch gekennzeichnet, dass** mindestens zwei Katalysatorkanäle einer Mehrkanalpackung gemäß Ansprüchen 1 bis 4 nebeneinander angeordnet werden.

6. Mehrkanalpackung gemäß Ansprüchen 1 bis 5, **dadurch gekennzeichnet, dass** die Höhe der Mehrkanalpackung 2 bis 20 cm beträgt.

7. Mehrkanalpackung gemäß Ansprüchen 1 bis 6, **dadurch gekennzeichnet, dass** Randabweiser an der Mehrkanalpackung oder am Kolonnenmantel befestigt sind.

8. Mehrkanalpackung nach Anspruch 7, **dadurch gekennzeichnet, dass** die Randabweiser aus Blech, Gewebe oder Kombination aus beiden gefertigt sind.

9. Mehrkanalpackung nach einem der Ansprüche 7 oder 8, **dadurch gekennzeichnet, dass** die Randabweiser an den nicht verkürzten Katalysator und/oder Gaskanälen der Mehrkanalpackung befestigt sind.

10. Mehrkanalpackung nach einem der Ansprüche 7 bis 9, **dadurch gekennzeichnet, dass** die Randabweiser eine zentrierende Wirkung auf die Mehrkanalpackung vorweisen.

## Claims

1. A multichannel packing for the performance of heterogeneously catalyzed reactive distillations, said packing having catalyst channels shortened laterally at least partly on one or both sides, wherein this shortening is from 1 to 10 times the equivalent diameter of the catalyst particles to be introduced.

2. The multichannel packing according to claim 1, wherein the shortening is from 2 to 5 times the equivalent diameter.

3. The multichannel packing according to claim 1 or 2, wherein the shortening is carried out fully on both sides.

4. The multichannel packing according to claims 1 and 2, wherein only the side is shortened at which the catalyst channels would otherwise be bounded at the top by the column jacket.

5. A multichannel packing, wherein at least two catalyst channels of the multichannel packing according to claims 1 to 4 are arranged adjacent to one another.

6. The multichannel packing according to claims 1 to 5, wherein the height of the multichannel packing is from 2 to 20 cm.

7. The multichannel packing according to claims 1 to 6, wherein edge deflectors are secured to the multichannel packing or to the column jacket.

8. The multichannel packing according to claim 7, wherein the edge deflectors are manufactured from sheet metal, fabric or combinations of both.

9. The multichannel packing according to either of claims 7 and 8, wherein the edge deflectors are secured to the unshortened catalyst and/or gas channels of the multichannel packing.

10. The multichannel packing according to any of claims 7 to 9, wherein the edge deflectors have a centering action on the multichannel packing.

## Revendications

1. Élément de remplissage à canaux multiples pour la mise en oeuvre de distillations réactives à catalyse hétérogène avec des canaux à catalyseur au moins en partie latéralement raccourcis d'un côté ou des deux côtés, dans lequel ce raccourcissement représente de 1 à 10 fois le diamètre équivalent des particules de catalyseur à utiliser pour le remplissage.

2. Élément de remplissage à canaux multiples selon la revendication 1, dans lequel le raccourcissement représente de 2 à 5 fois le diamètre équivalent.

3. Élément de remplissage à canaux multiples selon la revendication 1 ou 2, dans lequel le raccourcissement est effectué globalement sur les deux côtés.

4. Élément de remplissage à canaux multiples selon les revendications 1 à 2, dans lequel seul est raccourci le côté sur lequel les canaux à catalyseur seraient sinon limités au-dessus par l'enveloppe de colonne.

5. Élément de remplissage à canaux multiples **caractérisé en ce qu'**au moins deux canaux à catalyseur d'un élément de remplissage à canaux multiples selon les revendications 1 à 4 sont disposés l'un à côté de l'autre.

6. Élément de remplissage à canaux multiples selon les revendications 1 à 5, **caractérisé en ce que** la hauteur de l'élément de remplissage à canaux multiples est de 2 à 20 cm.

7. Élément de remplissage à canaux multiples selon les revendications 1 à 6, **caractérisé en ce que** des déflecteurs de bord sont fixés à l'élément de remplissage à canaux multiples ou à l'enveloppe de colonne.

8. Élément de remplissage à canaux multiples selon la revendication 7, **caractérisé en ce que** les déflecteurs de bord sont réalisés en tôle, en tissu ou en une combinaison des deux.

9. Élément de remplissage à canaux multiples selon l'une des revendications 7 ou 8, **caractérisé en ce que** les déflecteurs de bord sont fixés aux canaux à catalyseur et / ou aux canaux à gaz non raccourcis de l'élément de remplissage à canaux multiples.

10. Élément de remplissage à canaux multiples selon l'une des revendications 7 à 9, **caractérisé en ce que** les déflecteurs de bord produisent une action de centrage sur l'élément de remplissage à canaux multiples.
